# FASCICULE DE BREVET EUROPEEN

(11) **EP 2 702 867 B1**
(45) Date de publication et mention de la délivrance du brevet: **19.07.2017**
(21) Numéro de dépôt: 12306055.0
(22) Date de dépôt: 04.09.2012
(51) Int. Cl.: A01K 1/06, A61D 3/00

(54) **Dispositif de maintien de la tête d'un animal et cellule de maintien d'un animal comprenant un dispositif de maintien de la tête d'un animal**
Haltevorrichtung für den Kopf eines Tieres, und Tierhaltezelle, die eine solche Haltevorrichtung für den Kopf eines Tieres umfasst
Device for supporting the head of an animal and animal holding cell including a device for supporting the head of an animal

(43) Date de publication de la demande: 05.03.2014
(73) Titulaire: Equipement Veterinaire Minerve, 51310 Esternay (FR)
(72) Inventeur: Sannie, Sébastien, 77120 MAROLLES EN BRIE (FR)
(74) Mandataire: Milien, Jean-Baptiste Aurélien

(56) Documents cités:
- US-A- 3 542 030
- US-A- 4 549 501
- US-A1- 2011 083 614

## Description

### DOMAINE DE L'INVENTION

L'invention concerne un dispositif de maintien de la tête d'un animal, notamment, mais pas uniquement, d'un rongeur, et une cellule de maintien d'un animal comprenant un tel dispositif de maintien.

### ETAT DE LA TECHNIQUE ANTERIEURE

Le document US2011/0083614 décrit un dispositif de maintien de la tête d'un animal comprenant un châssis et deux barres d'oreille, chaque barre d'oreille comprenant un bras élastique solidaire du et pivotant par rapport au châssis et un embout configuré pour coopérer avec une oreille de l'animal disposé sur une portion d'extrémité distale de chaque bras. Dans ce dispositif connu, les bras étant élastiques, la force appliquée sur l'animal pour le maintenir en position n'est pas réglable. Ainsi, soit la force appliquée par les embouts est insuffisante pour réellement bloquer la tête de l'animal, soit la force appliquée est suffisante pour bloquer la tête de l'animal mais risque de le blesser.

US 3 542 030 et US 4 549 501 divulguent chacun un dispositif de maintien de la tête d'un animal.

### PRESENTATION DE L'INVENTION

Le but de l'invention est de remédier au moins substantiellement aux inconvénients énoncés ci-avant.

L'invention atteint son but en proposant un dispositif de maintien de la tête d'un animal selon la revendication 1, comprenant un châssis et deux barres d'oreille, chaque barre d'oreille comprenant un bras monté pivotant sur le châssis et un embout configuré pour coopérer avec une oreille de l'animal et disposé sur une portion d'extrémité distale de chaque bras, et des moyens de réglage coopérant avec les bras pour régler l'écartement des embouts.

On comprend que les moyens des réglages sont distincts des autres éléments du dispositif de maintien, en particulier des barres d'oreilles, des bras, des embouts et du châssis. Bien entendu, le dispositif peut comprendre d'autres bras que les deux bras des barres d'oreille, ces autres bras pouvant également coopérer avec les moyens de réglage, mais pas nécessairement.

Chaque bras peut être formé en une seule partie ou en plusieurs parties distinctes assemblées. Chacun des deux bras est équipé sur sa portion d'extrémité distale, c'est-à-dire sur sa portion s'étendant depuis l'extrémité disposée du côté du dispositif de maintien destiné à recevoir la tête de l'animal, d'un embout. Par exemple, la portion d'extrémité distale s'étend sur la moitié de la longueur totale du bras à compter de l'extrémité distale de ce dernier. Les barres d'oreilles sont destinées à bloquer les mouvements de la tête d'un animal vers sa droite et vers sa gauche, et les mouvements d'ensemble de sa tête. Le seul mouvement éventuellement possible lorsque la tête de l'animal est bloquée par les barres d'oreilles est un mouvement de rotation de la tête autour d'un axe s'étendant entre les deux embouts des barres d'oreille.

Les embouts peuvent faire partie intégrante des bras, et ne former qu'une seule pièce avec ceux-ci, ou bien former des pièces distinctes assemblées aux bras et, éventuellement, être amovibles des bras. Chaque embout est de forme et de structure plus ou moins complexe et de taille plus ou moins grande, et peut éventuellement comprendre plusieurs pièces ou sous parties. Chaque embout est destiné à coopérer avec la tête de l'animal au voisinage d'une oreille, ou directement avec une oreille de l'animale. Préférentiellement, chaque embout est configuré pour pénétrer en tout ou partie dans le conduit auditif de l'oreille de l'animal. Dans ce dernier cas, l'embout est de préférence configurée pour ne pas contacter ni endommager le tympan de l'animal. De manière générale, l'embout est configuré pour ne pas blesser l'animal. Par exemple, les embouts présentent une forme d'une saillie conique ou tronconique.

Les bras sont montés pivotants, c'est-à-dire via une liaison pivot, sur le châssis. Le châssis forme une pièce immobile par rapport aux bras. Les moyens de réglage exercent un effort sur les bras de manière à les faire pivoter, grâce à quoi l'écartement entre les bras, et donc les embouts est réglable (ou ajustable). Ainsi, lorsque les embouts coopèrent avec les oreilles d'un animal, en réglant l'écartement des embouts, on règle également la force exercée par les embouts sur la tête de l'animal. En diminuant, ou en tendant à diminuer l'écartement des embouts, on augmente la force (ou pression) appliquée sur la tête de l'animal, tandis qu'en augmenter, ou tendant à augmenter l'écartement des embouts, on diminue la force (ou pression) appliquée sur la tête de l'animal. En d'autres termes, les bras et les moyens de réglages agissent à la manière d'un étau.

Les moyens de réglage permettent donc d'adapter la force appliquée sur la tête d'un animal à chaque animal, de manière à pouvoir bloquer sa tête sans le blesser. La morphologie d'un animal variant d'un individu à l'autre au sein d'une même espèce (et *a fortiori* au sein d'un même genre ou d'une même famille), grâce aux bras pivotants et aux moyens de réglage, le dispositif de maintien selon l'invention est configuré pour s'adapter à chaque individu pour bloquer sa tête sans le blesser. Ceci permet en outre de bloquer la tête de l'animal avec une grande précision, c'est-à-dire de manière à ce que les seuls mouvements possibles sont de l'ordre de quelques dizaines de micromètres, et ce sans gêne particulière pour l'animal.

Le dispositif de maintien selon l'invention est par conséquent particulièrement bien adapté aux activités de recherches médicales et biologiques, par exemple sur des animaux de laboratoire, notamment, mais pas uniquement, aux activités de chirurgie de précision sur le cerveau ou aux activités d'imagerie médicale du cerveau, et plus particulièrement l'imagerie multimodale ou translationnelle (imagerie où un même individu est soumis à plusieurs méthodes d'imageries distinctes dont les résultats sont couplés par la suite). On comprend bien que de telles activités demandent un blocage de grande précision de la tête de l'animal tout en évitant une gêne notoire de l'animal, comme une blessure lors du blocage, qui pourrait générer des artefacts perturbant les mesures / images / interventions.

Les moyens de réglage coopèrent simultanément avec les deux bras pour régler l'écartement entre les bras. Ceci permet de simplifier l'utilisation et l'ergonomie du dispositif de maintien. Par exemple, l'utilisateur peut régler la force de maintien de la tête de l'animal d'une main, tout en maintenant la tête de l'animal en position de l'autre main pendant le réglage.

Les moyens de réglage comprennent une molette rotative coopérant en butée avec les deux bras, l'actionnement de la molette dans un premier sens de rotation forçant les deux bras à pivoter dans un premier sens de pivotement tandis que l'actionnement de la molette dans un second sens de rotation opposé au premier sens de rotation libère les deux bras dans un second sens de pivotement opposé au premier sens de pivotement.

Bien entendu, le dispositif de maintien peut comprendre d'autres molettes distinctes de la molette coopérant avec les bras définie ci-avant. Cependant, on comprend que la molette définie ci-avant est unique, bien que les moyens de réglage peuvent comprendre une ou plusieurs autre(s) molette(s) distincte(s), par exemple pour limiter l'écartement minimum ou maximum entre les embouts.

Lorsque la molette est actionnée (ou tournée ou entrainée) dans le premier sens de rotation, elle coopère simultanément avec les deux bras, en appuyant sur ces derniers. Les deux bras pivotent donc simultanément de manière à ce que l'écartement entre les embouts diminue ou augmente. Inversement, lorsque la molette est actionnée dans le second sens de rotation, un jeu apparaît simultanément entre la molette et chacun des deux bras, de sorte que les bras sont libérés au moins en partie de la molette, grâce à quoi les bras peuvent pivoter dans le second sens de rotation de manière à ce que l'écartement entre les embouts peut augmenter ou diminuer. Ainsi, lorsque les embouts coopèrent avec la tête d'un animal, en actionnant la molette pour régler l'écartement entre les deux embouts on règle la pression de maintien de la tête de l'animal.

Préférentiellement, lorsqu'on actionne la molette dans le premier sens l'écartement entre les embouts diminue tandis que lorsqu'on actionne la molette dans le second sens, l'écartement entre les embouts peut augmenter. Une telle configuration permet de simplifier la structure du dispositif de maintien, et donc de réduire ses coûts de fabrication tout en améliorant sa fiabilité.

Avantageusement, la molette coopère avec le châssis par vissage autour du châssis.

On comprend que le châssis s'étend selon une direction axiale, et présente un filetage sur sa face extérieure (ou filetage extérieur) orienté selon cette direction axiale. La molette est vissée au châssis via le filetage extérieur. La molette est donc mobile par rapport au châssis selon la direction axiale lorsqu'elle est actionnée. Ainsi, le châssis s'étend en tout ou en partie à l'intérieur de la molette, qui est par conséquent disposée en tout ou en partie autour du châssis. Une telle configuration de la molette présente une ergonomie avantageuse. Par ailleurs, une telle molette montée autour du châssis permet de libérer un maximum d'espace au niveau des barres d'oreilles autour de la tête de l'animal. Ceci est particulièrement avantageux pour les applications d'imageries médicales type TEMP ou IRM où les capteurs doivent être positionnés le plus près possible de la tête de l'animal et pouvoir décrire une rotation autour de celle-ci (par exemple autour de la direction axiale), afin d'obtenir la meilleure qualité d'image possible.

Préférentiellement, lorsque les embouts coopèrent avec la tête de l'animal, les bras s'étendent en tout ou partie dans un plan sensiblement parallèle à la direction axiale du châssis. Encore plus préférentiellement, les bras sont configurés pour que ledit plan soit sensiblement parallèle au plan transverse de la tête de l'animal (plan horizontal). Par « sensiblement parallèle » on entend que les deux parties considérées forment un angle compris entre 0° et 45° (degrés). Une telle configuration des bras permet d'une part d'optimiser l'intégration des bras au châssis, ce qui permet de fabriquer un dispositif de maintien de taille réduite (avantageux pour une utilisation dans un environnement à espace restreint comme un tube de scanner), et d'autre part d'obtenir une meilleure coopération entre les bras et la molette, ce qui permet un blocage plus efficace et plus fiable.

Avantageusement, les bras sont montés symétriquement par rapport à un plan médian.

On comprend que le plan médian est le plan équidistant des axes de pivotement des bras (et qui s'étend entre les axes de pivotement). Avantageusement, le châssis présente une forme générale extérieure sensiblement symétrique, par exemple une forme générale cylindrique. Le plan médian est alors avantageusement confondu avec un plan médian du châssis. Ceci permet d'obtenir une structure du dispositif de maintien plus simple et de taille plus réduite.

Un tel montage symétrique permet aux moyens de réglage, et plus particulièrement à la molette de coopérer de la même manière avec chaque bras.

Avantageusement, les barres d'oreilles sont symétriques par rapport à un plan médian.

Lorsque le montage des bras est également symétrique, ledit plan médian de symétrie des barres d'oreille est avantageusement confondu avec le plan médian du montage symétrique des bras. De même lorsque le châssis présente une forme générale extérieure sensiblement symétrique, le plan médian de symétrie des barres d'oreilles est avantageusement confondu avec un plan médian du châssis.

Lorsque les bras et les embouts sont symétriques et qu'ils sont montés symétriquement on s'assure que les moyens de réglage agissent symétriquement sur les bras, et que les forces de maintien exercées sur la tête de l'animal par chaque embout sont symétriques. Par ailleurs, une telle configuration permet de centrer la tête de l'animal par rapport au dispositif de maintien. Le centrage de l'animal peut s'avérer important par exemple lorsqu'on veut par la suite introduire l'animal et le dispositif de maintien dans un espace réduit comme un tunnel de scanner, et/ou lorsqu'on veut aligner le plan sagittal du cerveau de l'animal sur un plan de référence, par exemple un plan médian du dispositif de maintien.

Avantageusement, les bras sont amovibles.

Lorsque les bras sont retirés on peut, selon les configurations d'utilisation, plus facilement positionner l'animal en vis-à-vis du dispositif de maintien, et ensuite remonter les bras sur le châssis pour bloquer la tête de l'animal. Les bras amovibles permettent également de pouvoir utiliser le châssis dans le cadre d'applications différentes ne nécessitant pas un maintien de la tête de l'animal au niveau des oreilles, pour plus de polyvalence du dispositif de maintien.

Avantageusement, le dispositif de maintien comprend une barre de dent.

Une barre de dent est un dispositif configuré pour coopérer en appui avec au moins une dent d'un animal, par exemple une ou plusieurs incisives supérieures, pour maintenir la tête de l'animal.

En complément des barres d'oreille, la barre de dent permet de maintenir la tête de l'animal en limitant les mouvements de la tête de l'animal selon le seul degré de liberté de mouvement restant, à savoir la rotation de la tête autour de l'axe reliant les deux embouts (lorsque les embouts coopèrent avec la tête de l'animal). Grâce à la barre de dent, la précision du blocage de la tête est améliorée. Ainsi, de meilleurs résultats peuvent être obtenus par exemple dans le cadre d'activités de chirurgie du cerveau ou d'imagerie médicale du cerveau de l'animal, nécessitant une grande précision.

Avantageusement, le dispositif de maintien comprend une barre de blocage destinée à coopérer avec le museau de l'animal afin de bloquer au moins une dent de l'animal contre la barre de dent.

La barre de blocage permet de bloquer le museau de l'animal entre la barre de dent et la barre de blocage, de sorte que l'animal ne puisse pas dégager sa ou ses dents de la barre de dent, ni bouger par rapport à la barre de dent. En combinaison avec le blocage opéré par les barres d'oreille, un tel blocage permet de bloquer tous les mouvements de la tête de l'animal. Grâce à la barre de blocage, la précision du blocage de la tête est encore améliorée. En particulier, les inventeurs ont constaté que la combinaison des barres d'oreille, de la barre de dent et de la barre de blocage permet de bloquer la tête de l'animal de sorte qu'elle reste totalement immobile (mouvements inférieurs à quelques micromètres) y compris lors des mouvements du corps de l'animal lorsqu'il respire. Ainsi, de meilleurs résultats peuvent être obtenus par exemple dans le cadre d'activités de chirurgie du cerveau ou d'imagerie médicale du cerveau de l'animal nécessitant une grande précision.

Préférentiellement, la barre de blocage et la barre de dent sont mobiles l'une par rapport à l'autre. Ceci permet de faciliter l'amenée de l'animal sur la barre de dent et d'ajuster le blocage opéré par la barre de blocage en fonction de la morphologie de chaque animal. On évite ainsi de blesser l'animal tout en améliorant la facilité d'utilisation du dispositif de maintien.

On comprend bien entendu que selon différentes variantes de l'invention, seule la barre de dent est mobile par rapport au châssis, seule la barre de blocage est mobile par rapport au châssis, ou encore la barre de dent et la barre de blocage sont toutes les deux mobiles par rapport au châssis et l'une par rapport à l'autre.

Avantageusement, la barre de dent est montée sur une tige de barre de dent, ladite tige de barre de dent étant coulissante par rapport au châssis.

On comprend que le châssis comprend un palier recevant la tige de barre de dent en coulissement. En d'autres termes la tige de barre de dent est reliée au châssis par l'intermédiaire d'une liaison glissière. La tige de barre de dent permet d'ajuster la position de la barre de dent par rapport au châssis et par rapport aux embouts. Ainsi, le dispositif de maintien est encore mieux adaptable à la morphologie de chaque individu, ce qui permet de bloquer la tête de l'animal avec une plus grande précision et sans le blesser.

Préférentiellement, la tige de la barre de dent s'étend selon une direction longitudinale sensiblement parallèle au(x) plan(s) dans le(s)quel(s) les bras sont mobiles en pivotement (plan de mouvements des bras). Ainsi, la tige de barre de dent permet d'ajuster l'emplacement longitudinal de la barre de dent par rapport aux embouts. Ainsi, le dispositif selon l'invention est adaptable à la longueur de museau et à la distance oreille/dent propre à chaque individu. Préférentiellement, la direction longitudinale de la tige de la barre de dent coïncide avec la direction axiale du châssis.

Avantageusement, la barre de blocage est montée sur une tige de barre de blocage, ladite tige de barre de blocage étant coulissante par rapport au châssis.

La tige de barre de blocage est solidaire du châssis par l'intermédiaire d'une liaison glissière. Par exemple, la tige de barre de blocage est reçue en glissement dans un palier solidaire du châssis, ou dans un palier solidaire d'un autre élément, par exemple la tige de barre de dent, lui-même monté sur le châssis. Grâce à la tige de barre de blocage, la barre de blocage est mobile par rapport au châssis, par rapport à la barre de dent et par rapport aux bras et aux embouts.

Bien entendu, selon différentes variantes, seule la barre de dent est solidaire d'une tige de barre de dent coulissante par rapport au châssis, seule la barre de blocage est solidaire d'une tige de barre de blocage coulissante par rapport au châssis, ou encore la barre de dent est solidaire d'une tige de barre de dent tandis que la barre de blocage est solidaire d'une tige de barre de blocage, les tiges de barre de dent et de barre de blocage étant toutes les deux coulissantes par rapport au châssis et l'une par rapport à l'autre.

Avantageusement, la tige de barre de dent et la tige de barre de blocage sont parallèles.

Grâce à de telles tiges parallèles, la structure du dispositif de maintien est simplifiée, ce qui réduit son encombrement, son coût de fabrication et le rend plus fiable. Dans une variante préférentielle, la tige de barre de blocage et la tige de barre de dent sont coaxiale. Ainsi, la tige de barre de dent coulisse à l'intérieure de la tige de barre de blocage ou inversement.

Avantageusement, le dispositif de maintien comprend des moyens de couplage entre la tige de barre de dent et la tige de barre de blocage.

Les moyens de couplage permettent, de coupler ou de découpler les tiges afin de les faire coulisser solidairement ou indépendamment l'une de l'autre. Lorsqu'elles sont découplées, on peut ajuster la position d'une tige par rapport à l'autre, et donc de la barre de dent par rapport à la barre de blocage afin de bloquer le museau de l'animal entre la barre de dent et la barre de blocage. Lorsqu'elles sont couplées, on peut déplacer de concert (ou ensemble) les deux tiges, par exemple pour ajuster la position de la tête de l'animal par rapport aux embouts. Par exemple, les moyens de couplage peuvent comprendre une bague de couplage, une vis de solidarisation, un système cranté, des surfaces de frottements ou tout autre dispositif connu par ailleurs. Dans une variante préférentielle, la tige de barre de blocage et la tige de barre de dent sont coaxiales tandis que les moyens de couplage comprennent un élément en matériau viscoélastique, par exemple en caoutchouc ou équivalent, couplant en frottement les deux tiges. Avantageusement, l'élément en matériau viscoélastique est solidaire d'une des deux tiges, par exemple par collage ou par coopération par complémentarité de forme (par exemple un anneau logé dans une gorge annulaire).

Avantageusement, le châssis forme un masque d'induction de gaz.

On comprend que le châssis présente une portion formant un masque d'induction. Par exemple, cette portion forme une cavité conique ou tronconique configurée pour recevoir tout ou partie du museau de l'animal, et plus particulièrement le nez de l'animal. Le châssis et ladite portion forment avantageusement une seule et même pièce. Bien entendu, le masque d'induction est disposé du côté des embouts (en position de maintien). Préférentiellement la barre de dent et la barre de blocage sont disposées dans le masque d'induction, ou au voisinage de ce dernier.

Un tel masque d'induction permet par exemple d'anesthésier, ou de maintenir anesthésié l'animal pendant que sa tête est bloquée.

Avantageusement, le dispositif de maintien est fabriqué en matériau amagnétique et de densité inférieure à 1.3.

Le polycarbonate, le polyétheréthercétone (ou PEEK), l'acétale ou encore le polyméthacrylate de méthyle (ou PMMA) forment des exemples non limitatifs d'un tel matériau. Un tel matériau est transparent aux diverses méthodes d'imagerie classiquement utilisées (Imagerie par Résonnance Magnétique ou IRM, tomodensimétrie ou TDM, Tomographie d'Emission Monophotonique ou TEMP, Tomographie par Emission de Positons ou TEP, etc), et présente donc l'avantage de ne pas être visible sur l'image finale obtenue.

L'invention concerne également une cellule de maintien d'un animal comprenant un dispositif de maintien de la tête d'un animal selon l'invention.

La cellule de maintien comprend des moyens de maintien pour maintenir tout ou partie du corps d'un animal et le dispositif de maintien de la tête de l'animal. Par exemple, de tels moyens de maintien comprennent un lit configuré pour recevoir le corps de l'animal. Le châssis du dispositif de maintien de la tête de l'animal peut être soit formé d'une seule et même pièce avec les moyens de maintien, soit assemblé aux moyens de maintien par des moyens connus par ailleurs, par exemple par vissage ou encliquetage (ou clipsage).

### BREVE DESCRIPTION DES DESSINS

L'invention et ses avantages seront mieux compris à la lecture de la description détaillée faite ci-après d'un mode de réalisation de l'invention donné à titre d'exemple non limitatif. Cette description fait référence aux figures annexées, sur lesquelles :
- la figure 1 représente une vue en perspective d'une cellule de maintien d'un animal selon l'invention comprenant un dispositif de maintien de la tête d'un animal selon l'invention,
- la figure 2 est une vue de dessus du dispositif de maintien de la cellule de maintien de la figure 1,
- la figure 3 représente le dispositif de maintien de la figure 1, vu en éclaté en perspective,
- la figure 4 représente le dispositif de maintien de la figure 1 en perspective,
- la figure 5 représente le dispositif de maintien de la figure 1 en perspective selon un autre angle de vue que la figure 4,
- la figure 6 représente une vue en coupe selon le plan VI de la figure 4, et
- la figure 7 représente une vue en coupe selon le plan VII de la figure 6.

### DESCRIPTION DETAILLEE D'EXEMPLES DE REALISATION

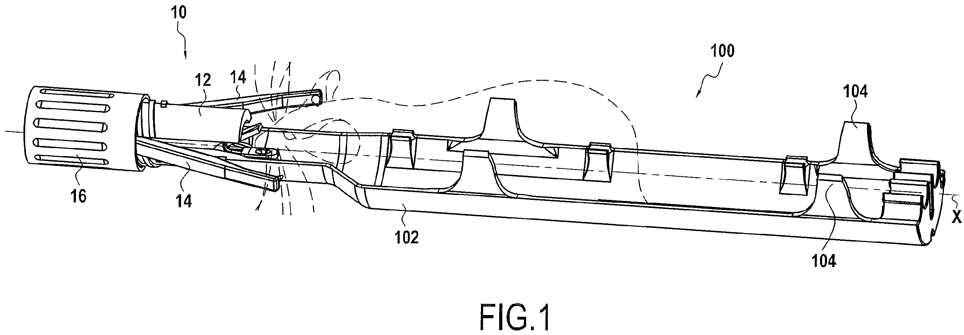

La figure 1 représente une cellule de maintien d'un animal 100 comprenant un dispositif de maintien de la tête d'un animal 10. Un animal, dans cet exemple un rongeur du type souris ou rat, est logé et maintenu dans la cellule de maintien 100. Dans l'exemple représenté, la cellule de maintien 100 comprend un lit 102 soutenant le corps de l'animal, tandis que le dispositif de maintien 10 est prévu pour bloquer la tête de l'animal. Le lit 102 et le châssis 12 du dispositif de maintien 10 forment dans cet exemple une seule et même pièce. Le lit 102 comprend des languettes élastiques 104 pour assembler par encliquetage la cellule de maintien 100 par exemple à un banc d'opérations chirurgicales, un banc d'imagerie ou autre. Ainsi, la cellule de maintien 100 permet de bloquer la tête de l'animal dans une position prédéterminée, et de déplacer l'animal dans son ensemble pour pouvoir le transporter d'un équipement à un autre, par exemple d'un premier banc d'imagerie médicale à un second banc d'imagerie médicale. Ainsi, grâce au dispositif de maintien 10, on s'assure que la position de l'animal est la même (reste inchangée) d'un équipement à l'autre reste inchangée au sein de la cellule de maintien 100, lorsqu'on déplace cette dernière d'un équipement à l'autre. Dans le cadre d'imageries médicales, en alignant chaque banc d'imagerie sur un même point de référence de la cellule de maintien 100 ou du dispositif de maintien 10, ce qui peut être réalisé par défaut lors de l'assemblage de la cellule 100 sur chaque banc d'imagerie grâce à un détrompeur ou à la position des languettes 104, il est particulièrement aisé de post-traiter les différentes images obtenues par chaque banc d'imagerie en les combinant, par exemple en les superposant. On s'assure ainsi que les images sont parfaitement alignées, ce qui permet d'obtenir une représentation fidèle de la disposition spatiale des diverses objets observés dans le cerveau de l'animal, les uns ne pouvant être observés qu'à l'aide du premier banc d'imagerie tandis que les autres ne peuvent être observés qu'à l'aide du second banc d'imagerie. Ceci correspond au procédé d'imagerie multimodale ou translationelle.

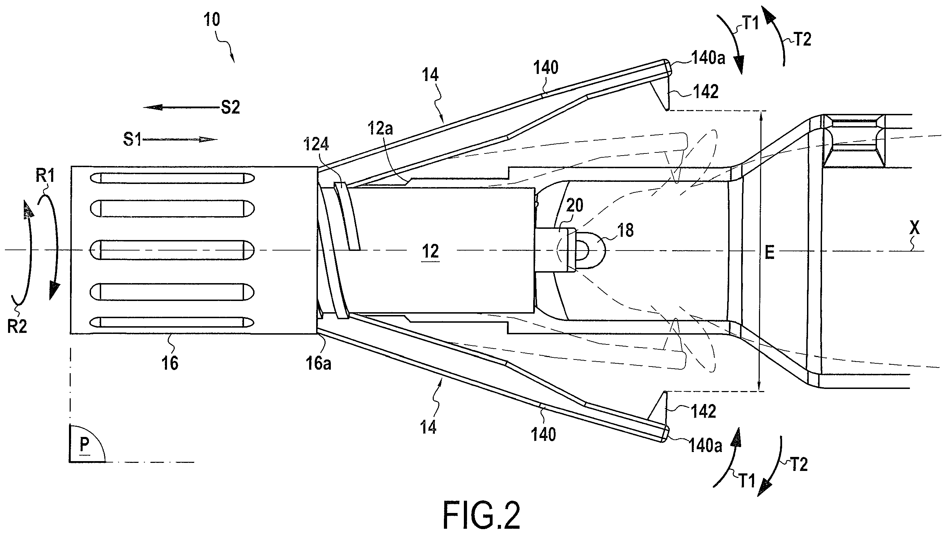

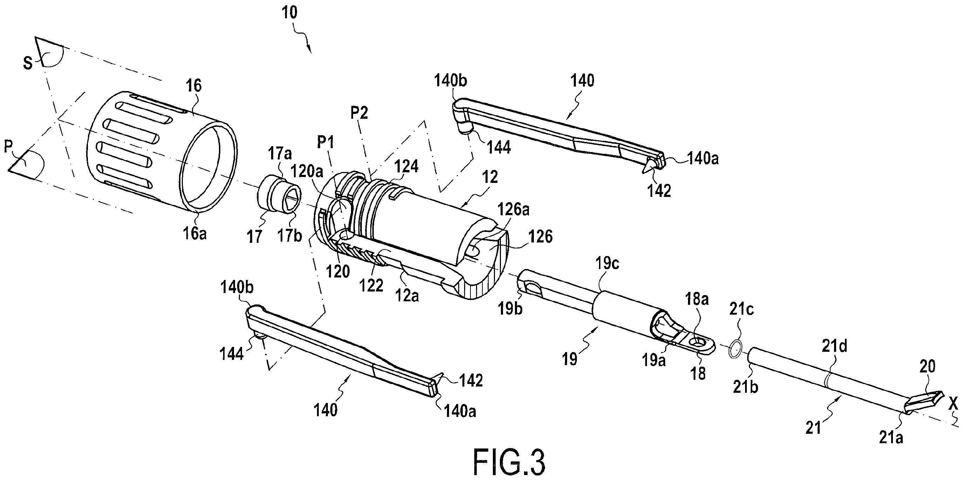

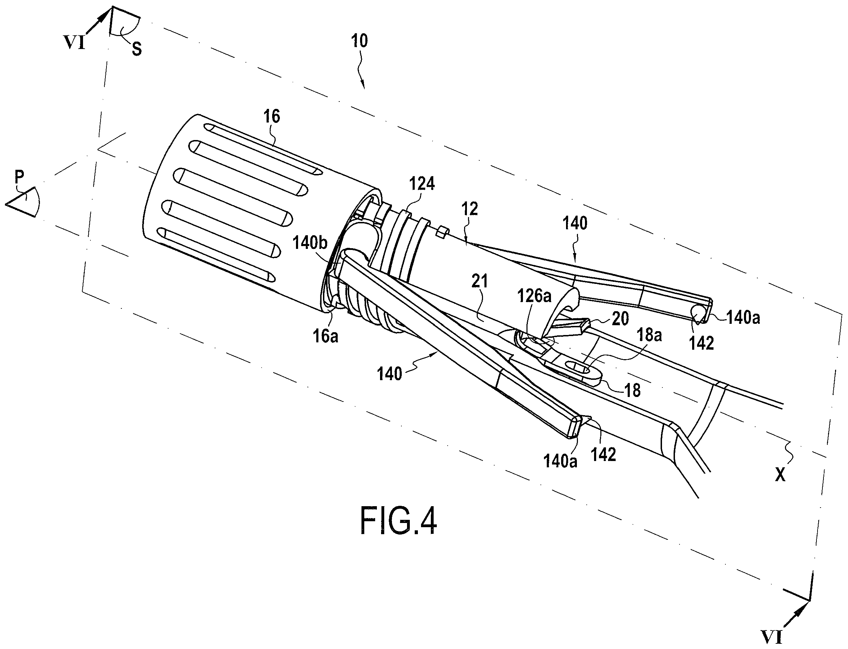

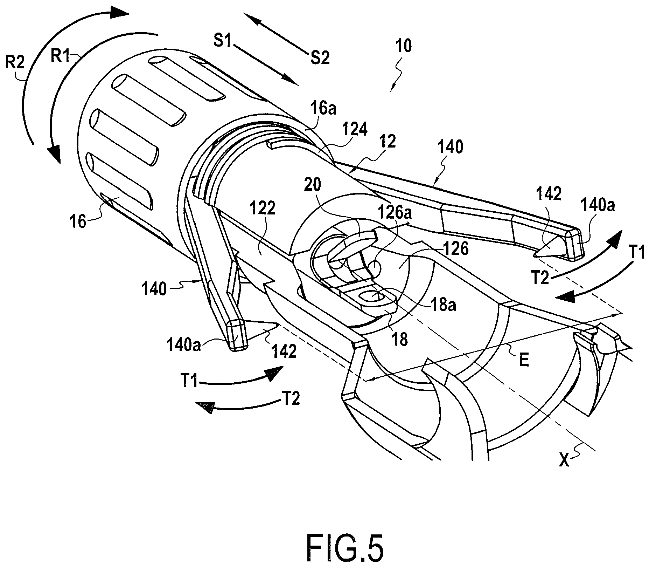

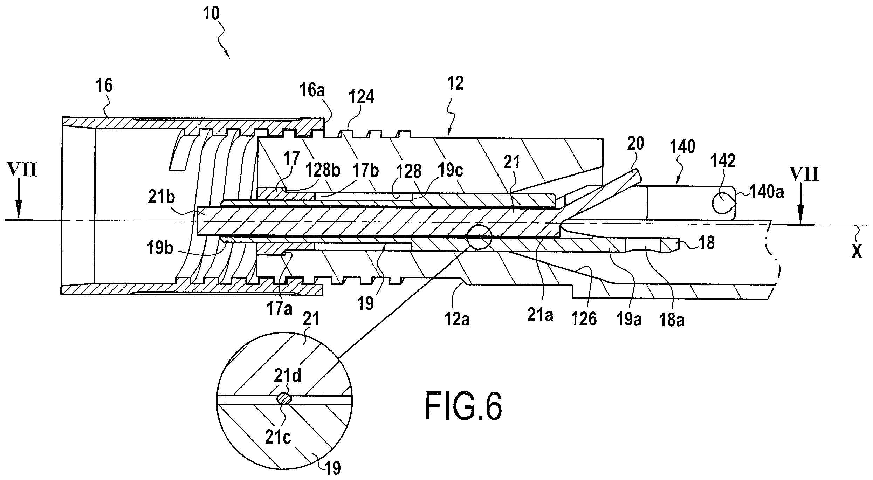

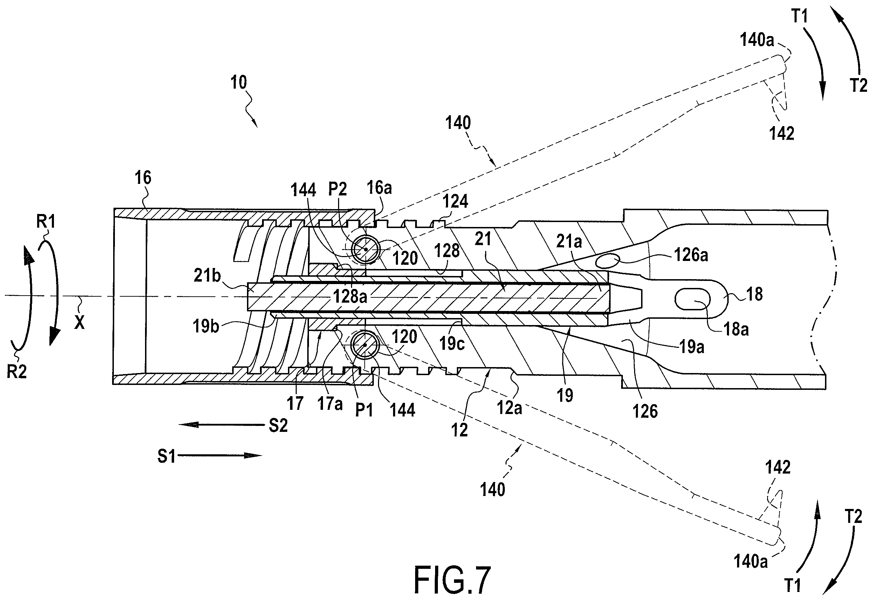

Le dispositif de maintien 10 est maintenant décrit en références aux figures 2 à 7.

Le dispositif de maintien 10 comprend le châssis 12 et deux barres d'oreille 14 comprenant chacune un bras pivotant 140, chaque bras 140 comprenant un embout 142. Le châssis 12 présente une forme générale cylindrique de section circulaire et s'étend selon une direction axiale X. Dans cet exemple, le lit 102 de la cellule de maintien 100 s'étend également selon la direction axiale X, le lit 102 et le châssis 12 étant disposé axialement dans le prolongement axial l'un de l'autre. Le châssis cylindrique 12 présente deux plans médians parallèles à la direction axiale X et perpendiculaires l'un par rapport à l'autre, un premier plan S et un second plan P. Les bras 140 sont montés pivotants sur le châssis 12, et sont mobiles en pivotement parallèlement au second plan P. Les bras 140, et donc les barres d'oreilles 14, sont montés symétriquement par rapport au premier plan S. En d'autres termes, dans cet exemple, les axes de pivotement P1 et P2 des bras 140 sont parallèles au premier plan S et perpendiculaires au second plan P. Bien entendu selon une variante ces axes de pivotement P1 et P2 ne sont pas parallèle au premier plan S et/ou ne sont pas perpendiculaires avec le second plan P. Les barres d'oreilles 14, et donc les bras 140 et les embouts 142, sont symétriques par rapport au premier plan S. Dans cet exemple, Le premier plan S forme un plan de symétrie du dispositif de maintien 10, bien entendu à l'exception du filetage 124 et du canal 126a décrit ultérieurement.

Les embouts 142 sont, dans cet exemple, configurés pour pénétrer dans les conduits auditifs de l'animal (bien entendu sans le blesser). Chaque embout 142 est disposé sur une portion d'extrémité distale s'étendant, dans cet exemple, sur 10% de la longueur totale du bras 140 à partir de leur extrémité distale 140a. Les embouts 142 sont formés pas des saillies coniques s'étendant perpendiculairement aux bras 140 (ou perpendiculairement à leur fibres neutre) de manière à être disposés sensiblement en vis-à-vis lorsque l'écartement entre les embouts est réduit. En d'autres termes, les embouts 142 sont orientés parallèlement au second plan P.

Les bras 140 présentent sur leur portion d'extrémité proximale 140b un arbre de pivotement 144 qui s'emmanche dans le palier 120 ménagé dans le châssis 12. L'arbre de pivotement 144 est parallèle au premier plan S et perpendiculaire au second plan P. Les bras 140 sont amovibles du châssis 12 grâce aux jours 120a ménagés dans le châssis 12 permettant de dégager les arbres de pivotement 144 des paliers 120. Les jours 120a s'étendent parallèlement au premier plan S et perpendiculairement au second plan P. En outre, le châssis 12 présente des logements axiaux 122 recevant les bras 140 lorsque les bras 140 sont parallèles à la direction axiale X. Ainsi, lorsque les bras 140 sont parallèles à la direction axiale X, ils sont logés dans le châssis 12. En d'autres termes, lorsque les bras 140 sont parallèles à la direction axiale X, ils ne font pas saillie radialement (i.e. perpendiculairement à la direction axiale X) du châssis 12.

Le châssis 12 présente sur son pourtour un filetage 124 pour monter en rotation autour du châssis 12 une molette rotative 16. Le filetage 124 s'étend axialement sur une portion axiale du châssis comprenant les paliers 120. Ainsi, lorsque la molette 16 est montée sur le châssis 12, elle enserre au moins en partie les bras 140, et plus particulièrement la portion d'extrémité proximale 140b de chaque bras 140, de manière à ce que le bord annulaire 16a de la molette 16 coopère en butée avec les bras 140. En d'autres termes, les bras 140 sont en tout ou parti disposés à l'intérieure de la molette 16. Ainsi la molette 16 coopère avec l'extérieur des bras 140, c'est-à-dire le côté des bras disposés du côté opposé de l'animal lorsque les embouts 142 coopèrent avec l'animal. Bien entendu selon une variante, la molette pourrait coopérer avec l'intérieur des bras (côté des bras en regard avec l'animal lorsque les embouts coopèrent avec l'animal), les bras étant alors disposés à l'extérieur de la molette.

Lorsqu'on active la molette 16 en la faisant tourner dans un premier sens de rotation R1, la molette 16 se déplace selon la direction axiale X dans un premier sens S1 (vers la tête de l'animal) et le bord annulaire 16a appuie sur les bras 140 de manière à faire pivoter chaque bras dans un premier sens de pivotement T1 tendant à diminuer l'écartement E entre les embouts 142. Inversement, lorsqu'on active la molette 16 en la faisant tourner dans un second sens de rotation R2 opposé au premier sens de rotation R1, la molette 16 se déplace selon la direction axiale X dans le second sens S2 (à l'opposé de la tête de l'animal) opposé au premier sens S1 de sorte que le bord annulaire 16a relâche la pression qu'il exerce sur les bras 140, de sorte que chaque bras 140 peut pivoter dans un second sens de pivotement T2, opposé au premier sens de pivotement T1, tendant à augmenter l'écartement E entre les embouts 142. Bien entendu, selon une variante, des moyens de rappel, par exemple un ressort à torsion ou un ressort à compression, est disposé entre chaque bras 140 et le châssis 12 de manière à faire pivoter automatiquement les bras 140 dans leur second sens de pivotement T2 lorsqu'on active la molette 16 dans le second sens de rotation S2.

On notera que les premier et second sens de pivotement d'un arbre 140 correspondent respectivement au second et premier sens de pivotement de l'autre arbre 140, chaque arbre 140 ayant un mouvement de pivotement antagoniste (ou contraire) vis-à-vis de l'autre arbre 140 lorsqu'on active la molette 16.

Le châssis 12 présente un épaulement 12a formant une butée coopérant avec la molette 16 lorsque la molette 16 est déplacée axialement dans le sens S1. Cet épaulement 12a permet d'éviter que la molette 16 ne se désengage du filetage 124 du châssis 12 lorsqu'elle est activée dans le sens de rotation R1.

Le châssis présente une cavité tronconique 126 s'étendant selon la direction axiale X et formant un masque d'indiction de gaz, le museau de l'animal pénétrant dans le masque 126 par la grande base de la forme tronconique. Un canal d'amené de gaz 126a débouchant dans le masque 126 est ménagé dans le châssis 12, et traverse l'épaisseur de la paroi du châssis 12 de l'extérieur du châssis vers l'intérieur du masque. Ainsi, on peut connecter un tuyau d'amené de gaz à l'extérieur du châssis 12 sans gêner les mouvement des éléments mobiles tels que les barres d'oreilles 14, la molette 16, la barre de dent 18 et la barre de blocage 20.

De manière générale, le côté où est disposé le masque 126 forme l'avant du châssis 12, et plus généralement du dispositif de maintien 10, tandis que le côté opposé au masque 126 forme l'arrière du châssis 12, et plus généralement du dispositif de maintien 10. Ainsi, la molette 16 est vissée sur le châssis 12 depuis l'arrière, la barre de dent 18 et la barre de blocage 20 étant disposées à l'avant.

En outre, le châssis 12 présente un perçage 128, dans cet exemple de section circulaire mais pouvant présenter tout autre forme, s'étendant selon l'axe X, dans le prolongement du masque 126. Un palier 17 est emmanché à force dans le perçage 128. Selon une variante, le palier est collé ou vissé, ou rendu solidaire du châssis 12 par tout autre moyen connu par ailleurs. Le perçage 128 présente un épaulement 128b coopérant avec un épaulement 17a du palier 17.

Le palier 17 reçoit en glissement une tige de barre de dent 19 portant à son extrémité distale 19a la barre de dent 18. La tige de barre de dent 19 traverse axialement le palier 17 est fait saillie du châssis 12 vers l'arrière (côté opposé à la barre de dent 18 et au embout 142 lorsqu'ils coopèrent avec l'animal). Ainsi, l'extrémité proximale 19b peut être manipulée pour faire glisser la tige de barre de dent 19 dans le palier 17 et ajuster la position axiale de la barre de dent 18. Bien entendu, la tige 19 peut être plus ou moins longue de manière à pouvoir plus ou moins facilement la manipuler l'extrémité proximale 19b.

La tige de barre de dent 19 présente un épaulement 19c coopérant en butée avec le bord annulaire avant (disposé du côté de la barre de dent 18) du palier 17. Ceci permet de limiter les déplacements axiaux de la tige de barre de dent 19 afin d'éviter de dégager la tige de barre de dent 19 du palier 17 lorsqu'on la fait coulisser vers l'arrière (sens S2)

Par ailleurs, la tige de barre de dent 19 présente une section circulaire présentant deux méplats diamétralement opposés tandis que le palier 17 présente une section de forme complémentaire de manière à bloquer les rotations de la tige de barre de dent 19 dans le palier 17, et ce afin d'opérer un meilleur blocage des dents de l'animal par la barre de dent 18. Plus généralement, la section de la tige de barre de dent 19 et la section du palier 17 sont configurée pour bloquer les rotations de la tige de barre de dent 19 dans le palier 17 (par exemple grâce à une section non circulaire).

Une tige de barre de blocage 21 est montée coaxialement et en glissement à l'intérieur de la tige de barre de dent 19. L'extrémité distale 21a de la tige de barre de blocage 21 porte la barre de blocage 20. L'extrémité proximal 21b de la tige de barre de blocage 21 fait axialement saillie vers l'arrière de la tige de barre de dent 19 et donc du châssis 12. Cette extrémité proximale 21b peut être manipulée pour faire glisser la tige de barre de blocage 21 dans la tige de barre de dent 19 et ajuster la position axiale de la barre de blocage 20 par rapport à la barre de dent 18.

La tige de barre de blocage 21 comprend un anneau en caoutchouc 21c logé dans une gorge annulaire 21d. Cet anneau 21c coopère en frottement avec la tige de barre de dent 19 et forme des moyens de couplage entre la tige de barre de dent 19 et la tige de barre de blocage 21. Ainsi, les deux tiges sont naturellement couplées. Pour les découpler, il suffit de maintenir une tige en position pendant qu'on déplace l'autre tige en glissement. Bien entendue, l'anneau 21c (ou les moyens de couplages) est configuré pour que les efforts de couplage soient supérieurs aux efforts que l'animal fourni lorsqu'il essaye de se dégager des barres de dent 18 et de blocage 20.

Pour maintenir l'animal au sein de la cellule de maintien on peut procéder, par exemple comme il suit. Bien entendu, l'ordre des étapes indiquées peut au besoin, et si possible, être inversé.

Tout d'abord, on dispose les barres d'oreilles de sorte que l'écartement entre les embouts 142 soit supérieur à la largeur de la tête de l'animal (par exemple un écartement deux fois plus grand que la largeur de la tête), comme représenté en traits continus sur la figure 2. On peut bien entendu prévoir un écartement encore plus important, par exemple en désolidarisant (dévissant) la molette 16 du châssis 12 et/ou en retirant les barres 140 du châssis 12.

Ensuite on dispose l'animal sur le lit 102, la tête de l'animal disposée du côté du dispositif de maintien 10. On place les dents de l'animal sur la barre de dent 18, par exemple en insérant les incisives supérieures de l'animal dans la fenêtre 18a de la barre de dent 18. Par la suite on bloque la tête de l'animal en coopération avec la barre de dent 18 en amenant la barre de blocage 20, en appui contre le museau de l'animal. Pour ce faire on déplace la barre de blocage 20 axialement en faisant coulisser la tige de barre de blocage 21 par rapport à la tige de barre de dent 19. Bien entendu, on aura pris soin avant d'amener la tête de l'animal sur la barre de dent 18, de déplacer la barre de blocage 20 afin de ménager un espace suffisant pour le museau et pouvoir placer les dents de l'animal sur la barre de dent 18.

Lorsque la tête de l'animal est bloquée entre la barre de dent 18 et la barre de blocage 20, on fait pivoter les bras 140 des barres d'oreilles 14 selon le premier sens de pivotement T1, afin d'estimer la position axiale des embouts 142 par rapport aux oreilles de l'animal. On ajuste alors la position axiale de la tête de l'animal de manière pouvoir faire pénétrer les embouts 142 dans les conduits auditifs des oreilles de l'animal, en déplaçant axialement la barre de dent 18 et la barre de blocage 20 en faisant glisser la tige de barre de dent 19 dans le palier 17, la tige de barre de blocage 21 étant couplée à la tige de barre d'oreille 19 et le museau de l'animal restant bloqué entre la barre de dent 18 et la barre de blocage 20. Bien entendu, lors de cette opération de déplacement axial, on prend soin de déplacer axialement le corps de l'animal sur le lit 102 afin de ne pas le blesser et de ne pas imposer d'effort sur son cou de nature à la blesser.

Ensuite on active la molette dans le premier sens de rotation R1 de manière à réduire l'écartement E entre les embouts 142 au minimum et à faire pénétrer les embouts 142 dans les conduits auditifs de l'animal. On ajuste alors la pression, ou force de blocage, exercée par les bras 140 et les embouts 142 sur la tête de l'animal en activant la molette 16 afin de bloquer la tête de l'animal sans le blesser. Bien entendu en tournant la molette 16 dans le premier sens de rotation R1 on augmente la pression de blocage sur la tête de l'animal tandis qu'en tournant la molette 16 dans le second sens de rotation R2 on diminue ladite pression de blocage.

Lorsque la tête de l'animal est bloquée dans le dispositif de maintien 10, on peut alors placer la cellule de maintien 100 sur un banc de chirurgie ou d'imagerie médicale. Bien entendu, selon une variante, la cellule de maintien 100 fait partie intégrante d'un tel banc, ou d'un autre dispositif de chirurgie/imagerie/mesure. On peut alors brancher un tube d'amené de gaz au canal 126a, pour introduire dans le masque 126 un gaz, par exemple un gaz anesthésiant, pour maintenir anesthésié ou pour anesthésier l'animal. Bien entendu d'autres gaz peuvent être amenés via le canal 126a.

Lorsque les opérations chirurgicales, de mesures et/ou d'imageries sont finies, on retire la cellule de maintien 100 dudit banc puis on libère l'animal en tournant la molette 16 dans le second de rotation R2 et en faisant pivoter les bras 140 dans le second sens de pivotement T2, et en libérant son museau en faisant coulisser la tige de barre de blocage 21 par rapport à la tige de barre de dent 19. On peut alors retirer l'animal du lit 102 et donc de la cellule de maintien 100.

De manière générale, grâce à sa structure générale, à la structure de chacun des éléments, notamment du châssis, mais aussi grâce à la disposition relative des éléments entre eux, le dispositif de maintien selon l'invention présente l'avantage de former un dispositif compact permettant de bloquer avec une grande précision la tête d'un animal tout en ménageant (en laissant) un maximum d'espace libre autour de l'animal. Cet espace libre permet de plus facilement intervenir sur et autour de l'animal. En particulier cet avantage de structurel et d'encombrement est lié à tout ou partie des aspects suivants, à savoir la présence d'un châssis unique ; le châssis formant un masque ; les moyens de réglage, les barres d'oreilles, de dent et de blocage étant portés par ce châssis unique ; l'ensemble étant configuré pour être disposé d'un seul et même côté de l'animal comme représenté sur l'exemple illustratif des figures 1 et 2.

Bien que la présente invention ait été décrite en se référant à un exemple de réalisation spécifique, il est évident que des modifications et des changements peuvent être effectués sur cet exemple sans sortir de la portée générale de l'invention telle que définie par les revendications. En particulier, des caractéristiques individuelles des différentes variantes illustrés/mentionnés peuvent être combinées dans des modes de réalisation additionnels. Par conséquent, la description et les dessins doivent être considérés dans un sens illustratif plutôt que restrictif.

## Revendications

1. Dispositif de maintien de la tête d'un animal (10), comprenant un châssis (12) et deux barres d'oreille (14), chaque barre d'oreille (14) comprenant un bras (140) monté pivotant sur le châssis (12) et un embout (142) configuré pour coopérer avec une oreille de l'animal et disposé sur une portion d'extrémité distale de chaque bras (140), et des moyens de réglage (16) coopérant avec les bras (140) pour régler l'écartement des embouts (142), le dispositif de maintien (10) étant **caractérisé en ce que** les moyens de réglage comprennent une unique molette rotative (16) coopérant simultanément en butée avec les deux bras (140), l'actionnement de la molette (16) dans un premier sens de rotation (R1) forçant les deux bras (140) à pivoter dans un premier sens de pivotement (T1) tandis que l'actionnement de la molette (16) dans un second sens de rotation (R2) opposé au premier sens de rotation (R1) libère les deux bras (140) dans un second sens de pivotement (T2) opposé au premier sens de pivotement (T).

2. Dispositif de maintien (10) selon la revendication 1, dans lequel la molette (16) coopère avec le châssis (12) par vissage autour du châssis (12).

3. Dispositif de maintien (10) selon la revendication 1 ou 2, dans lequel les bras (140) sont montés symétriquement par rapport à un plan médian (S).

4. Dispositif de maintien (10) selon l'une quelconque des revendications 1 à 3, dans lequel les bras (140) sont symétriques par rapport à un plan médian (S).

5. Dispositif de maintien (10) selon l'une quelconque des revendications 1 à 4, dans lequel les bras (140) sont amovibles.

6. Dispositif de maintien (10) selon l'une quelconque des revendications 1 à 5, comprenant une barre de dent (18).

7. Dispositif de maintien (10) selon la revendication 6, comprenant une barre de blocage (20) destinée à coopérer avec le museau de l'animal afin de bloquer au moins une dent de l'animal contre la barre de dent (18).

8. Dispositif de maintien selon la revendication 6 ou 7, dans lequel la barre de dent (18) est montée sur une tige de barre de dent (19), ladite tige de barre de dent (19) étant coulissante par rapport au châssis (12).

9. Dispositif de maintien (10) selon la revendication 7 ou selon les revendications 7 et 8, dans lequel la barre de blocage (20) est montée sur une tige de barre de blocage (21), ladite tige de barre de blocage (21) étant coulissante par rapport au châssis (12).

10. Dispositif de maintien (10) selon les revendications 8 et 9, dans lequel la tige de barre de dent (19) et la tige de barre de blocage (21) sont parallèles.

11. Dispositif de maintien (10) selon la revendication 8 et 9, ou selon la revendication 10, comprenant des moyens de couplage (21c) entre la tige de barre de dent (19) et la tige de barre de blocage (21).

12. Dispositif de maintien (10) selon l'une quelconque des revendications 1 à 11, dans lequel le châssis (12) forme un masque d'induction de gaz (126).

13. Dispositif de maintien (10) selon l'une quelconque des revendications 1 à 12, fabriqué en matériau amagnétique et de densité inférieure à 1.3.

14. Cellule de maintien d'un animal (100) comprenant un dispositif de maintien de la tête d'un animal (10) selon l'une quelconque des revendications 1 à 13.

## Patentansprüche

1. Vorrichtung zum Halten des Kopfes eines Tieres (10), umfassend einen Rahmen (12) und zwei Ohrstäbe (14), wobei jeder Ohrstab (14) einen Arm (140), welcher an dem Rahmen (12) schwenkbar angebracht ist, und ein Ansatzstück (142), welches dazu ausgelegt ist, mit einem Ohr des Tieres zusammenzuwirken, und welches an einem distalen Endabschnitt eines jeden Arms (140) angeordnet ist, umfasst, sowie Einstellmittel (16), die mit den Armen (140) zusammenwirken, um den Abstand der Ansatzstücke (142) einzustellen, wobei die Haltevorrichtung (10) **dadurch gekennzeichnet ist, dass** die Einstellmittel ein einziges Drehrad (16) umfassen, das mit den beiden Armen (140) gleichzeitig anschlagend zusammenwirkt, wobei die Betätigung des Rades (16) in einer ersten Drehrichtung (R1) die beiden Arme (140) zwingt, in eine erste Schwenkrichtung (T1) zu verschwenken, während die Betätigung des Rades (16) in einer zu der ersten Drehrichtung (R1) entgegengesetzten zweiten Drehrichtung (R2) die beiden Arme (140) in einer zu der ersten Schwenkrichtung (T1) entgegengesetzten zweiten Schwenkrichtung (T2) freigibt.

2. Haltevorrichtung (10) nach Anspruch 1, bei der das Rad (16) mit dem Rahmen (12) durch Verschrauben um den Rahmen (12) herum zusammenwirkt.

3. Haltevorrichtung (10) nach Anspruch 1 oder 2, bei der die Arme (140) in Bezug auf eine Mittelebene (S) symmetrisch angebracht sind.

4. Haltevorrichtung (10) nach einem der Ansprüche 1 bis 3, bei der die Arme (140) in Bezug auf eine Mittelebene (S) symmetrisch sind.

5. Haltevorrichtung (10) nach einem der Ansprüche 1 bis 4, bei der die Arme (140) lösbar sind.

6. Haltevorrichtung (10) nach einem der Ansprüche 1 bis 5, die einen Zahnstab (18) umfasst.

7. Haltevorrichtung (10) nach Anspruch 6, die einen Blockierstab (20) umfasst, welcher dazu bestimmt ist, mit der Schnauze des Tieres zusammenzuwirken, um wenigstens einen Zahn des Tieres an dem Zahnstab (18) festzulegen.

8. Haltevorrichtung nach Anspruch 6 oder 7, bei der der Zahnstab (18) an einer Zahnstabstange (19) angebracht ist, wobei die Zahnstabstange (19) gegenüber dem Rahmen (12) verschieblich ist.

9. Haltevorrichtung (10) nach Anspruch 7 oder nach den Ansprüchen 7 und 8, bei der der Blockierstab (20) an einer Blockierstabstange (21) angebracht ist, wobei die Blockierstabstange (21) gegenüber dem Rahmen (12) verschieblich ist.

10. Haltevorrichtung (10) nach den Ansprüchen 8 und 9, bei der die Zahnstabstange (19) und die Blockierstabstange (21) parallel sind.

11. Haltevorrichtung (10) nach Anspruch 8 und 9 oder nach Anspruch 10, die Kopplungsmittel (21 c) zwischen der Zahnstabstange (19) und der Blockierstabstange (21) umfasst.

12. Haltevorrichtung (10) nach einem der Ansprüche 1 bis 11, bei der der Rahmen (12) eine Gaseinlassmaske (126) bildet.

13. Haltevorrichtung (10) nach einem der Ansprüche 1 bis 12, die aus nicht magnetischem Material gefertigt ist und eine Dichte von weniger als 1.3 aufweist.

14. Zelle zum Halten eines Tieres (100), die eine Vorrichtung zum Halten des Kopfes eines Tieres (10) nach einem der Ansprüche 1 bis 13 umfasst.

## Claims

1. A device for supporting the head of an animal (10), comprising a chassis (12) and two ear bars (14), each ear bar (14) comprising an arm (140) mounted pivoting on the chassis (12) and a tip (142) configured to cooperate with an ear of the animal and positioned on a distal end portion of each arm (140), and adjusting means (16) cooperating with the arms (140) to adjust the separation of the tips (142), the support device (10) being **characterized in that** the adjusting means comprise a single rotary knob (16) cooperating simultaneously in abutment with the two arms (140), actuating the knob (16) in a first rotation direction (R1) forcing the two arms (140) to pivot in a first pivot direction (T1), while actuating the knob (16) in a second rotation direction (R2) opposite the first rotation direction (R1) releases the two arms (140) in a second pivot direction (T2) opposite the first pivot direction (T1).

2. The support device (10) according to claim 1, wherein the knob (16) cooperates with the chassis (12) by screwing around the chassis (12).

3. The support device (10) according to one of claims 1 or 2, wherein the arms (140) are mounted symmetrically relative to a median plane (S).

4. The support device (10) according to any one of claims 1 to 3, wherein the arms (140) are symmetrical relative to a median plane (S).

5. The support device (10) according to any one of claims 1 to 4, wherein the arms (140) are removable.

6. The support device (10) according to any one of claims 1 to 5, comprising a tooth bar (18).

7. The support device (10) according to claim 6, comprising a blocking bar (20) configured to cooperate with the muzzle of the animal in order to block at least one tooth of the animal against the tooth bar (18).

8. The support device according to claim 6 or 7, wherein the tooth bar (18) is mounted on a tooth bar rod (19), said tooth bar rod (19) sliding relative to the chassis (12).

9. The support device (10) according to claim 7 or according to claims 7 and 8, wherein the blocking bar (20) is mounted on a blocking bar rod (21), said blocking bar rod (21) sliding relative to the chassis (12).

10. The support device (10) according to claims 8 and 9, wherein the tooth bar rod (19) and the blocking bar rod (21) are parallel.

11. The support device (10) according to claims 8 and 9, or according to claim 10, comprising coupling means (21c) between the tooth bar rod (19) and the blocking bar rod (21).

12. The support device (10) according to any one of claims 1 to 11, wherein the chassis (12) forms a gas induction mask (126).

13. The support device (10) according to any one of claims 1 to 12, made from a non-magnetic material having a density lower than 1.3.

14. An animal holding cell (100) comprising a support device for the head of an animal (10) according to any one of claims 1 to 13.
